(19) Europäisches Patentamt
European Patent Office
Office européen des brevets

(11) **EP 2 604 650 B1**

(12) **EUROPEAN PATENT SPECIFICATION**

(45) Date of publication and mention
of the grant of the patent:
**13.12.2017 Bulletin 2017/50**

(21) Application number: **11816489.6**

(22) Date of filing: **11.08.2011**

(51) Int Cl.:
*C08L 9/00* (2006.01)          *B60C 1/00* (2006.01)
*C08K 5/17* (2006.01)          *C08L 7/00* (2006.01)
*C08L 71/02* (2006.01)          *C08L 91/06* (2006.01)
*C08K 5/06* (2006.01)          *C08K 5/1535* (2006.01)
*C08K 5/1545* (2006.01)          *C08L 9/06* (2006.01)
*C08L 21/00* (2006.01)

(86) International application number:
**PCT/JP2011/068381**

(87) International publication number:
**WO 2012/020826 (16.02.2012 Gazette 2012/07)**

(54) **RUBBER COMPOSITION, METHOD FOR PREVENTING DISCOLORATION OF RUBBER COMPOSITION, AND TIRE**

KAUTSCHUKZUSAMMENSETZUNG, VERFAHREN ZUR VERHINDERUNG EINER VERFÄRBUNG DER KAUTSCHUKZUSAMMENSETZUNG UND REIFEN

COMPOSITION DE CAOUTCHOUC, PROCÉDÉ POUR PRÉVENIR LA DÉCOLORATION D'UNE COMPOSITION DE CAOUTCHOUC, ET PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.08.2010 JP 2010180481**
**11.08.2010 JP 2010180480**

(43) Date of publication of application:
**19.06.2013 Bulletin 2013/25**

(73) Proprietors:
• **Bridgestone Corporation**
**Tokyo 104-8340 (JP)**
• **Kao Corporation**
**Chuo-Ku**
**Tokyo 103-8210 (JP)**

(72) Inventors:
• **TAHARA, Seichi**
**Kodaira-shi**
**Tokyo 187-8531 (JP)**
• **FUJIKI, Kumi**
**Kodaira-shi**
**Tokyo 187-8531 (JP)**
• **TSUCHIHASHI, Masaaki**
**Wakayama-shi**
**Wakayama 640-8580 (JP)**
• **TAKANO, Tetsuo**
**Wakayama-shi**
**Wakayama 640-8580 (JP)**

(74) Representative: **Lamb, Martin John Carstairs et al**
**Marks & Clerk LLP**
**90 Long Acre**
**London WC2E 9RA (GB)**

(56) References cited:
EP-A1- 0 890 603          EP-A1- 1 425 338
EP-A1- 1 462 479          EP-A1- 1 757 658
JP-A- 5 194 790          JP-A- 10 017 712
JP-A- 11 130 908          JP-A- 53 008 643
JP-A- 2001 098 111          JP-A- 2004 204 126
JP-A- 2004 307 812          JP-A- 2008 274 158
JP-A- 2009 161 667          US-A- 5 714 533
US-A1- 2001 051 677          US-A1- 2008 202 660
US-B1- 6 598 632

**Description**

Technical Field

The present invention relates to a rubber composition, a method for preventing discoloration of a rubber composition, and a tire using the rubber composition, and relates to a rubber composition capable of preventing tire skin rubber from browning and especially favorable for use for tread rubber, to a method for preventing discoloration of a rubber composition and to a tire using the rubber composition.

Background Art

In general, the degradation of a rubber product from a starting material of a natural rubber or a dienic synthetic rubber goes on in the presence of ozone whereby the surface thereof is cracked. The cracking further goes on owing to the static and dynamic stress given to the rubber product, and as a result, the rubber product is thereby broken.

For preventing generation and propagation of the cracks owing to ozone, a rubber composition containing, as an antiaging agent, an amine-based antiaging agent such as N-(1,3-dimethylbutyl)-N'-phenyl-p-phenylenediamine or the like is applied to rubber products. For the purpose of static prevention from ozone, wax is incorporated into the rubber composition for forming a protective film on the surfaces of the rubber products.

However, though the above-mentioned amine-based antiaging agent and wax could be effective for preventing generation and propagation of cracks in the presence of ozone, those ingredients may readily move through the polymer substrate such as the rubber component or the like and may transfer onto the surfaces of rubber products, especially tires within a short period of time, and may discolor the rubber products during storage or in use thereof to worsen the outward appearance of those rubber products. Here, in case where wax transfers onto the surface, then the surface may whiten, and in case where the amine-based antiaging agent transfers on the surface, then the surface may brown.

To the above, a technique of incorporating a polyoxyethylene ether-based nonionic surfactant or a sorbitan-based surfactant into a rubber composition for tire side walls for preventing the discoloration by the amine-based antiaging agent and wax has been disclosed (PTL 1, PTL 2, PTL 3). However, according to these techniques, it is still impossible to fully prevent discoloration of rubber compositions for treads.

Reference is also made to US 2001/051677 which discloses tire sidewalls comprising a vulcanized elastomeric composition, US 2008/202660 which discloses a tire sidewall formed from a composition including a rubber component and a non-ionic surfactant and EP 0890603 which discloses a silica-filled, vulcanized elastomeric compound. In addition, EP 1425338 discloses rubber compositions with increased reinforcing filler dispersion, US 5714533 discloses a rubber composition with improved charging property and EP 1757658 discloses a rubber composition with improved braking performance.

Citation List

Patent Literatures

> PTL 1: JP-A 5-194790
> PTL 2: JP-A 2004-307812
> PTL 3: JP-A 2001-200105

Summary of Invention

Technical Problem

Accordingly, an object of the present invention is to provide a rubber composition capable of preventing discoloration due to an amine-based antiaging agent and wax without deteriorating the ozone resistance not only in cases where the rubber composition is used in side wall portions of tires but also in cases where the rubber composition is used in tread portions of tires and keeping a good outward appearance of tires, to provide a method for preventing discoloration of a rubber composition, and to provide a tire using the rubber composition.

Solution to Problem

The present inventors have assiduously studied for attaining the above-mentioned object and, as a result, have found that, when a nonionic surfactant having a specific structure is incorporated in a rubber component, then there is obtained a rubber composition which, even when used in tread portions of tires, is prevented from being discolored due to an amine-based antiaging agent and wax without deteriorating the ozone resistance thereof, and then have performed the present invention.

Specifically, the present invention provides the following:

[1] A rubber composition comprising at least one rubber component selected from a dienic synthetic rubber and a natural rubber and, as incorporated therein, at least one nonionic surfactant selected from the compounds represented by the following formula (I):

[Chem. 1]

$$R^2O(R^1O)_nH \ldots \qquad (I)$$

[In the formula (I), $R^2$ represents an alkyl group or an alkenyl group having from 8 to 12 carbon atoms, and the alkyl group and the alkenyl group may be any of linear chain-like, branched chain-like or cyclic ones; $R^1$ represents an alkylene group having from 2 to 4 carbon atoms; n indicates a mean addition molar number, and is from 16 to 30];
[2] The rubber composition according to the above [1], containing wax as incorporated therein;
[3] The rubber composition according to the above [1] or [2], containing an antiaging agent as incorporated therein;
[4] The rubber composition according to any of the above [1] to [3], wherein the nonionic surfactant is incorporated in an amount of from 0.1 to 10 parts by mass relative to 100 parts by mass of the rubber component therein;
[5] The rubber composition according to any of the above [1] to [4], wherein in the nonionic surfactant of the above formula (I), $R^1$ is an alkylene group having from 2 or 3 carbon atoms, and n is from 16 to 30;
[6] A tire of which the outer skin is formed of the rubber composition of any of the above [1] to [5]; and
[7] A method for preventing discoloration of a rubber composition, comprising incorporating at least one nonionic surfactant selected from the compounds represented by the following formula (I) to at least one rubber component selected from a dienic synthetic rubber and a natural rubber:
[Chem. 2]

$$R^2O(R^1O)_nH \ldots \qquad (I)$$

[In the formula (I), $R^2$ represents an alkyl group or an alkenyl group having from 8 to 12 carbon atoms, and the alkyl group and the alkenyl group may be any of linear chain-like, branched chain-like or cyclic ones; $R^1$ represents an alkylene group having from 2 to 4 carbon atoms; n indicates a mean addition molar number, and is from 12 to 30];
[8] The method for preventing discoloration according to the above [7], wherein the mean addition molar number is from 16 to 30.

Advantageous Effects of Invention

According to the present invention, by incorporating the nonionic surfactant having a specific structure to the rubber component, there are provided a rubber composition capable of preventing discoloration due to an amine-based antiaging agent and wax without deteriorating the ozone resistance not only in cases where the rubber composition is used in side wall portions of tires but also in cases where the rubber composition is used in tread portions of tires, a method for preventing discoloration of a rubber composition, and a tire using the rubber composition.

Description of Embodiments

The present invention is described in detail hereinunder.
The rubber composition and the discoloration preventing method of the present invention comprise incorporating at least one of the nonionic surfactants represented by the above-mentioned formula (I) in at least one rubber component selected from a dienic synthetic rubber and a natural rubber.
Browning of the outer skin of a tire results from transfer of an antiaging agent and wax onto the surface of the tire through the polymer substrate such as a rubber component or the like to cause precipitation of wax on the surface of the tire thereby roughening the surface to provide light scattering thereon while, in addition, the antioxidant adhering to the roughened surface is oxidized to be a coloring component, whereby the outer skin of the tire appears to be discolored in brown.
In the rubber composition and the discoloration preventing method of the present invention, the nonionic surfactant represented by the above-mentioned formula (I) flattens and smoothens the roughened surface of wax precipitated on the surface to thereby improve the light-scattering condition to prevent browning. Specifically, in the nonionic surfactant represented by the above-mentioned formula (I), the length of the hydrophobic group $R^2$ and the length of the hydrophilic group $(R^1O)_n$ are specifically defined so that the miscibility of the surfactant with the rubber composition is thereby controlled, or that is, the surfactant can have suitable miscibility with the rubber composition to thereby exhibit the above-mentioned function as precipitating on the surface of a tire.

In the rubber composition and the discoloration preventing method of the invention, the amount of the nonionic surfactant is preferably from 0.1 to 10 parts by mass relative to 100 parts by mass of the rubber component, more preferably from 0.5 to 7 parts by mass, even more preferably from 0.5 to 5 parts by mass. When the amount is at least 0.1 parts by mass, then the surfactant is effective for preventing discoloration by an amine-based antiaging agent and wax; and when at most 10 parts by mass, then the surfactant does not bloom and can prevent any excessive glossiness, and in addition, the surfactant does not cause surface stickiness to lower the workability with the composition.

Adding the surfactant does not lower the ozone resistance.

The rubber component to be used in the rubber composition and the discoloration preventing method of the present invention includes a dienic synthetic rubber and a natural rubber. The dienic synthetic rubber includes an isoprene rubber (IR), a polybutadiene rubber (BR), a styrene-butadiene copolymer rubber (SBR), etc. One alone or two or more of these rubber components may be used here either singly or as blended. Specifically, it is desirable that the rubber component contains at least one selected from a natural rubber, an isoprene rubber, a styrene-butadiene copolymer rubber and a polybutadiene rubber. More preferably, the rubber component is a styrene-butadiene copolymer rubber alone, a mixture of a styrene-butadiene copolymer rubber and a polybutadiene rubber, a mixture of a natural rubber and a styrene-butadiene copolymer rubber, or a mixture of a natural rubber and a polybutadiene rubber.

In general, the rubber component preferably used in the tread portion mainly comprises SBR, having an SBR content of from 50 to 100% by mass, while the rubber component preferably used in the side wall portion is a mixture of a natural rubber and BR.

The nonionic surfactant to be used in the rubber composition and the discoloration preventing method of the present invention is represented by the above-mentioned formula (I). One alone or two or more different types of those nonionic surfactants may be used here either singly or as combined, for which commercial products are preferred.

In the formula (I), $R^2$ represents an alkyl group or an alkenyl group having from 8 to 12 carbon atoms, and the alkyl group and the alkenyl group may be any of linear chain-like, branched chain-like or cyclic ones. The carbon number of the alkyl group and the alkenyl group is from 8 to 12, from the viewpoint of the tackiness, the adhesiveness and the discoloration degree. Concretely, there are preferably mentioned one or more alkyl groups selected from a hexyl group, an isoheptyl group, a 2-ethylhexyl group, an octyl group, a nonyl group, an isononyl group, a decyl group, an undecyl group, a dodecyl group, a tridecyl group, an isotridecyl group, a tetradecyl group, and a pentadecyl group. More preferred are one or more selected from a 2-ethylhexyl group, an octyl group, a nonyl group, an isononyl group, a decyl group, an undecyl group and a dodecyl group; and even more preferred are one or more selected from a nonyl group, an isononyl group, a decyl group and an undecyl group.

$R^1$ in the formula (I) is an alkylene group having from 2 to 4 carbon atoms, preferably an alkylene group having 2 or 3 carbon atoms, and more preferably an alkylene group having 2 carbon atoms.

n in the formula (I) is from 16 to 30 but preferably from 16 to 25, from the viewpoint of the tackiness, the adhesiveness, the discoloration degree and the vulcanization speed (productivity). However, in the case of the discoloration preventing method for a rubber composition in which it is not always necessary to specifically consider the vulcanization speed (productivity), n in the formula (I) is from 12 to 30, preferably from 16 to 30, more preferably from 16 to 25.

From these, in the nonionic surfactant of the above-mentioned formula (I) to be used in the rubber composition of the present invention, preferred is a combination where $R^1$ is an alkylene group having 2 or 3 carbon atoms, and n is from 16 to 30; more preferred is a combination where $R^2$ is an alkyl group or an alkenyl group having from 8 to 12 carbon atoms, $R^1$ is an alkylene group having 2 or 3 carbon atoms, and n is from 16 to 30; even more preferred is a combination where $R^2$ is an alkyl group or an alkenyl group having from 8 to 12 carbon atoms, $R^1$ is an alkylene group having 2 or 3 carbon atoms, and n is from 16 to 25; and still more preferred is a combination where $R^2$ is an alkyl group or an alkenyl group having from 8 to 12 carbon atoms, $R^1$ is an alkylene group having 2 carbon atoms, and n is from 16 to 25.

In the nonionic surfactant of the above-mentioned formula (I) to be used in the discoloration preventing method of the present invention, preferred is a combination where $R^1$ is an alkylene group having 2 or 3 carbon atoms, and n is from 12 to 30; more preferred is a combination where $R^2$ is an alkyl group or an alkenyl group having from 8 to 12 carbon atoms, $R^1$ is an alkylene group having 2 or 3 carbon atoms, and n is from 12 to 30; even more preferred is a combination where $R^2$ is an alkyl group or an alkenyl group having from 8 to 12 carbon atoms, $R^1$ is an alkylene group having 2 or 3 carbon atoms, and n is from 16 to 30; still more preferred is a combination where $R^2$ is an alkyl group or an alkenyl group having from 8 to 12 carbon atoms, $R^1$ is an alkylene group having 2 or 3 carbon atoms, and n is from 16 to 25; and further more preferred is a combination where $R^2$ is an alkyl group or an alkenyl group having from 8 to 12 carbon atoms, $R^1$ is an alkylene group having 2 carbon atoms, and n is from 16 to 25.

Preferably, the HLB value (hydrophilicity/lipophilicity balance value) of the nonionic surfactant represented by the above formula (I) is from 10 to 19. Here, the HLB value is defined by the Griffin's formula mentioned below.

$$HLB = 20 \times Mw/M$$

(wherein M represents the molecular weight of a nonionic surfactant; and Mw represents the molecular weight of the hydrophilicity moiety of the nonionic surfactant).

When the HLB value of the nonionic surfactant represented by the above formula (I) is at least 10, then the lipophilicity thereof can be depressed and the miscibility thereof with rubber can also be depressed to thereby enable transfer of the surfactant to surface; and when the value is at most 19, then the miscibility of the surfactant with rubber can be increased to thereby facilitate kneading of the rubber composition while preventing the surfactant from being adsorbed by filler to also facilitate transfer of the surfactant to surface.

More preferably, the HLB value of the nonionic surfactant represented by the above formula (I) is from 15 to 19, even more preferably from 15 to 18. When the HLB value is at least 15, the transfer rate of the surfactant to surface can be further increased to thereby promote the browning preventing effect thereof.

Preferably, an amine-based antiaging agent and wax are incorporated in the rubber composition for the purpose of preventing generation and propagation of cracks by ozone. The amine-based antiaging agent includes N-(1,3-dimethylbutyl)-N'-phenyl-p-phenylenediamine, etc.

In addition, the rubber composition may contain carbon black or silica as a reinforcing filler. Not specifically defined, any commercial products of carbon black and silica are usable here. Above all, preferred are wet-type silica, dry-type silica or colloidal silica, and more preferred is wet-type silica. Both carbon black and silica can be used here as combined. The amount of the reinforcing filler to be in the composition is preferably from 30 to 120 parts by mass relative to 100 parts by mass of the rubber component therein. In case where silica is used as the reinforcing filler, a silane coupling agent may be incorporated in the composition in an amount of from 1 to 20 parts by mass or so relative to 100 parts by mass of silica from the viewpoint of the reinforcing capability thereof, but in an amount of from 6 to 12 parts by mass from the viewpoint of the pyrogenicity thereof.

Further, any additive generally used in the rubber industry, such as a vulcanizing agent, a vulcanization promoter, a scorch inhibitor, a softening agent, zinc oxide, stearic acid or the like may be suitably selected and incorporated in the rubber composition within a range not detracting from the object of the invention. For the additives, commercial products are favorably used.

The rubber composition can be produced by kneading the rubber component and the nonionic surfactant optionally along with additives that are suitably selected, then warming and extruding the resulting mixture.

The pneumatic tire of the present invention is characterized in that the above-mentioned rubber composition is applied to any of the rubber parts of the tire, and preferably, the rubber composition is applied to the outer skin of the tire, especially to the tread portion or the side wall portion thereof. Since the tire contains the above-mentioned nonionic surfactant, the amine-based antiaging agent and wax therein are prevented from moving to the surface of the tire, and the tire is prevented from discoloring and its outward appearance is kept good for a long period of time.

Examples

The present invention is described in more detail with reference to the following Examples, however, the present invention is not whatsoever limited by the following Examples.

Examples 1 to 11 and Comparative Examples 1 to 10

A rubber composition comprising the formulation shown in Table 1 (in which the rubber component is mainly SBR) and containing the nonionic surfactant in the amount shown in Table 2 was prepared, and vulcanized at 160°C for 14 minutes. Thus obtained, the vulcanized rubber was evaluated for the tensile stress, the ozone resistance, the tackiness, the adhesiveness, the vulcanization speed and the discoloration degree thereof according to the methods mentioned below. The results are shown in Table 2.

(1) Tensile Stress

As a typical index of rubber properties, the tensile stress at 300% elongation was measured. Concretely, using a JIS #3 dumbbell-type test piece, the tensile stress at 300% elongation was measured according to JIS K 6251:2004. The data were expressed as exponential values based on the value 100 of Comparative Example 1. The samples having a larger exponential value have a larger tensile stress at 300% elongation.

(2) Ozone Resistance

According to JIS K 6259:2004, each test piece produced in Examples 1 to 10 and Comparative Examples 1 to 9 was tested for ozone degradation at a temperature of 40°C and an ozone concentration of 50 pphm and under the condition of 20% elongation. After 50 hours, the test piece was checked for degradation and was evaluated based on the presence or absence of cracks generated therein.

(3) Tack Test

Each test piece was tested according to JIS-T 9233-3.8.6(2) Mitsuhashi Method (Picma Tack test). As each test piece of Examples and Comparative Examples, one piece having a width of 15 mm and a length of 100 mm was collected. The surface of an adhesive disc (made of aluminium, having a diameter of 50 mm and a thickness of 14 mm) was washed with hexane, and dried at room temperature for 30 minutes. The sample (test piece) was stuck to the disc with a double adhesive tape. The start button of the tester was pushed to lower the adhesive disc so that the disc could be kept in contact with the sample. After kept in contact for 30 seconds under a load of 500 gf, the sample was pulled up at 30 mm/sec. (Test piece temperature, adhesive disc temperature, laboratory temperature: 23°C.) The power by which the sample was separated from the adhesive disc was measured five times, and the data were averaged. The average was expressed as an exponential value based on the value 100 of the rubber composition of Comparative Example 1. The samples having a larger exponential value have a higher tackiness and are excellent in workability.

(4) Adhesiveness Test

Three steel cords (outer diameter 0.5 mm x length 300 mm) each plated with brass (Cu: 63% by mass, Zn: 37% by mass) were aligned in parallel to each other at intervals of 10 mm, and these steel cords were coated on both sides thereof with each rubber composition, and vulcanized at 160°C for 20 minutes to prepare a sample.
According to ASTM-D-2229, each sample was tested for the adhesiveness thereof. Briefly, the steel cords were drawn away from each sample, and the rubber coating condition on each cord was visually checked and expressed in terms of from 0 to 100% as an index of the adhesiveness of the sample.

(5) Vulcanization Speed

According to JIS-K-6300-1994, Comparative Examples 1 to 3 were evaluated as controls (having an exponential value of 100) to other compositions. Samples having a larger exponential value take a longer time for vulcanization.

(6) Degree of Discoloration

Using a colorimeter (Nippon Denshoku's model name, NF333), each test piece of vulcanized rubber was tested for the degree of discoloration thereof. The found data were expressed as $L^*$, $a^*$, $b^*$. $L^*$ indicates the brightness, and $a^*$ and $b^*$ each indicate the hue. The value $a^*$ and the value $b^*$ of 0 each mean colorless. The value $a^*$ of a higher positive means nearer to red while the value $a^*$ of a higher negative means nearer to green; and the value $b^*$ of a higher positive means nearer to yellow while the value $b^*$ of a higher negative means nearer to blue. The degree of discoloration just after vulcanization was determined by measuring the value $b^*$ just after vulcanization and by visually checking the level of discoloration just after vulcanization. Under the outdoor environment in summer season (under a roof as shielded from rain with receiving direct sunlight for a predetermined period of time a day), the vulcanized rubber piece was left for 1 month. After thus left, the rubber piece was evaluated for the degree of discoloration based on the measured value $b^*$ and the visually-inspected discoloration degree.
The degree of discoloration was evaluated in five ranks. 5 was given to the sample with noticeable discoloration; 4 was given to the sample of which a half or more discolored; 3 was given to the sample of which less than a half discolored; 2 was given to the sample which discolored only a little; and 1 was given to the sample which did not discolor.
From a composition prepared by incorporating the compound A into the rubber composition for tire treads, and from the rubber composition not containing a surfactant, radial tires for passenger cars each having a tire size of 205/65R15 were produced according to an ordinary method, and tested in the same discoloration test as above. The results are shown in Table 3.
[Table 1]

Table 1

| | Composition 1 (part by mass) | Composition 2 (part by mass) | Composition 3 (part by mass) |
|---|---|---|---|
| SBR *1 | 100 | 100 | 80 |
| Natural Rubber | - | - | 20 |
| Carbon Black *2 | 50 | 25 | 25 |
| Silica *3 | - | 25 | 25 |
| Silane Coupling Agent *4 | - | 2 | 2 |
| Stearic Acid | 1 | 1 | 1 |
| Wax *5 | 2 | 2 | 2 |
| Antiaging Agent 6PPD *6 | 4 | 4 | 4 |
| Antiaging Agent TMQ *7 | 0.3 | 0.3 | 0.3 |
| Zinc Flower | 2.5 | 2.5 | 2.5 |
| Vulcanization Promoter DPG *8 | 0.6 | 0.8 | 0.8 |
| Vulcanization Promoter MBTS *9 | 0.6 | 0.8 | 0.8 |
| Vulcanization Promoter CBS *10 | 0.6 | 0.9 | 0.9 |
| Sulfur | 1.5 | 1.5 | 1.5 |
| Nonionic Surfactant | variable | variable | variable |

*1 JSR's "SBR #1500"
*2 Tokai Carbon's "Seast 7HM"
*3 Tosoh Silica's "Nipseal AQ"
*4 Bis(3-ethoxysilylpropyl) tetrasulfide
*5 Microcrystalline wax, Nippon Seiro's "Ozoace-0701"
*6 Ohuchi Shinko Chemical's "Nocrack 6C"
*7 Seiko Chemical's "Nonflex RD-S"
*8 Ohuchi Shinko Chemical's "Nocceler D"
*9 Ohuchi Shinko Chemical's "Nocceler DM"
*10 Sanshin Chemical's "Sanceler CM-G"

[Table 2]

Table 2-1

| | Example 1 Composition 1 | Example 2 Composition 1 | Example 3 Composition 1 | Example 4 Composition 2 | Example 5 Composition 3 | Example 6 Composition 2 | Example 7 Composition 2 | Example 8 Composition 2 | Example 9 Composition 2 | Example 10 Composition 3 |
|---|---|---|---|---|---|---|---|---|---|---|
| Compound A | 1.5 | 0.5 | 2 | 1.5 | 1.5 | 1 | - | - | - | - |
| Compound B | - | - | - | - | - | - | 1.5 | - | - | - |
| Compound C | - | - | - | - | - | - | - | 1.5 | - | - |
| Compound D | - | - | - | - | - | - | - | - | 1.5 | |
| Compound E | - | - | - | - | - | - | - | - | - | 1.5 |
| Compound F | - | - | - | - | - | - | - | - | - | - |
| Compound G | - | - | - | - | - | - | - | - | - | - |
| Compound H | - | - | - | - | - | - | - | - | - | - |
| Compound I | - | - | - | - | - | - | - | - | - | - |
| Compound J | - | - | - | - | - | - | - | - | - | - |
| 300% Modulus | 100 | 100 | 102 | 104 | 98 | 101 | 101 | 101 | 105 | 101 |
| Ozone Resistance (presence or absence of cracks) | absence | absence | absence | absence | absence | absence | absence | absence | absence | absence |
| Tack Test | 101 | 100 | 99 | 103 | 105 | 101 | 100 | 98 | 99 | 99 |
| Adhesiveness Test | 95 | 100 | 95 | 93 | 94 | 98 | 98 | 98 | 95 | 95 |
| Vulcanization Speed | 90 | 95 | 88 | 92 | 93 | 91 | 86 | 91 | 90 | 90 |
| Discoloration Test b* just after vulcanization | 0.74 | 0.15 | 0.01 | -0.24 | 0.11 | -0.20 | -0.46 | -0.41 | -1.10 | -0.18 |

|  | Example 1 Composition 1 | Example 2 Composition 1 | Example 3 Composition 1 | Example 4 Composition 2 | Example 5 Composition 3 | Example 6 Composition 2 | Example 7 Composition 2 | Example 8 Composition 2 | Example 9 Composition 2 | Example 10 Composition 3 |
|---|---|---|---|---|---|---|---|---|---|---|
| degree of discoloration just after vulcanization | 1 | 1 | 1 | 1 | 1 | 1 | 1 | 1 | 1 | 1 |
| b* after shelf test | -0.44 | 0.8 | -0.12 | 0.09 | 0.01 | 0.73 | 0.16 | 0.21 | 1.10 | 0.33 |
| degree of discoloration after shelf test | 1 | 1 | 1 | 1 | 1 | 1 | 1 | 1 | 1 | 1 |

[Table 3]

[Table 3]

Table 2-2

|  | Comparative Example 1 Composition 1 | Comparative Example 2 Composition 2 | Comparative Example 3 Composition 3 | Comparative Example 4 Composition 1 | Comparative Example 5 Composition 2 | Comparative Example 6 Composition 2 | Comparative Example 7 Composition 2 | Comparative Example 8 Composition 2 | Comparative Example 9 Composition 2 |
|---|---|---|---|---|---|---|---|---|---|
| Compound A | - | - | - | - | - | - | - | - | - |
| Compound B | - | - | - | - | - | - | - | - | - |
| Compound C | - | - | - | - | - | - | - | - | - |
| Compound D | - | - | - | - | - | - | - | - | - |
| Compound E | - | - | - | - | - | - | - | - | - |
| Compound F | - | - | - | 1.5 | 1.5 | - | - | - | - |
| Compound G | - | - | - | - | - | 1.5 | - | - | - |
| Compound H | - | - | - | - | - | - | 1.5 | - | - |
| Compound I | - | - | - | - | - | - | - | 1.5 | - |
| Compound J | - | - | - | - | - | - | - | - | 1.5 |
| 300% Modulus | 100 | 100 | 100 | 97 | 103 | 101 | 106 | 100 | 105 |
| Ozone Resistance (presence or absence of cracks) | absence | absence | absence | absence | absence | absence | absence | absence | absence |
| Tack Test | 100 | 100 | 100 | 102 | 105 | 100 | 103 | 80 | 78 |
| Adhesiveness Test | 100 | 100 | 100 | 95 | 93 | 97 | 97 | 83 | 81 |
| Vulcanization Speed | 100 | 100 | 100 | 98 | 99 | 98 | 97 | 98 | 91 |
| Discoloration Test b* just after vulcanization | 0.26 | -1.24 | -1.80 | 0.33 | -1.10 | -0.78 | -0.21 | -1.42 | -2.42 |

(continued)

| | Comparative Example 1 Composition 1 | Comparative Example 2 Composition 2 | Comparative Example 3 Composition 3 | Comparative Example 4 Composition 1 | Comparative Example 5 Composition 2 | Comparative Example 6 Composition 2 | Comparative Example 7 Composition 2 | Comparative Example 8 Composition 2 | Comparative Example 9 Composition 2 |
|---|---|---|---|---|---|---|---|---|---|
| degree of discoloration just after vulcanization | 1 | 1 | 1 | 1 | 1 | 1 | 1 | 1 | 1 |
| b* after shelf test | 3.32 | 3.62 | 2.10 | 2.95 | 2.23 | 0.08 | 2.30 | 1.60 | 2.53 |
| degree of discoloration after shelf test | 5 | 5 | 4 | 5 | 4 | 1 | 4 | 2 | 5 |

[Table 4]

Table 3

|  | Comparative Example 10 Composition 2 | Example 11 Composition 2 |
|---|---|---|
| Compound A | - | 1.5 |
| Discoloration Test | | |
| b* just after vulcanization | -0.11 | -0.20 |
| degree of discoloration just after vulcanization | 1 | 1 |
| b* after shelf test | 3.24 | 1.50 |
| degree of discoloration after shelf test | 5 | 2 |

In Table 2, the compound A is Kao's nonionic surfactant, trade name "Emulgen 1118" (polyoxyethylene alkyl ether), which corresponds to the above-mentioned formula (I) where $R^2$ is mainly $C_{11}H_{23}$, $R^1$ is $C_2H_4$, and n is 18, and which has an HLB value of 16.4;

the compound B is Kao's nonionic surfactant, trade name "Emulgen 123P" (polyoxyethylene lauryl ether), which corresponds to the above-mentioned formula (I) where $R^2$ is $C_{12}H_{25}$, $R^1$ is $C_2H_4$, and n is 23, and which has an HLB value of 16.9;

the compound C is Kao' s nonionic surfactant trial sample, polyoxyethylene 2-ethylhexyl ether, which corresponds to the above-mentioned formula (I) where $R^2$ is $C_8H_{17}$, $R^1$ is $C_2H_4$, and n is 20, and which has an HLB value of 17.7;

the compound D is Kao' s nonionic surfactant trial sample, polyoxyethylene 2-ethylhexyl ether, which corresponds to the above-mentioned formula (I) where $R^2$ is $C_8H_{17}$, $R^1$ is $C_2H_4$, and n is 30, and which has an HLB value of 18.4;

the compound E is Kao' s nonionic surfactant, trade name "Emulgen 130K" (polyoxyethylene lauryl ether), which corresponds to the above-mentioned formula (I) where $R^2$ is $C_{12}H_{25}$, $R^1$ is $C_2H_4$, and n is 30, and which has an HLB value of 18.1;

the compound F is Kao's sorbitan-based nonionic surfactant, trade name "Rheodol TW-S106V", in which the long-chain alkyl group is $C_{17}H_{35}$, and the ethylene oxide addition molar number is 6, and which has an HLB value of 9.6;

the compound G is Kao's nonionic surfactant, trade name "Emulgen 120" (polyoxyethylene lauryl ether), which corresponds to the above-mentioned formula (I) where $R^2$ is $C_{12}H_{25}$, $R^1$ is $C_2H_4$, and n is 12, and which has an HLB value of 15.3;

the compound H corresponds to the above-mentioned formula (I) where $R^2$ is $C_{14}H_{29}$, $R^1$ is $C_2H_4$, and n is 4, and which has an HLB value of 9.4;

the compound I corresponds to the above-mentioned formula (I) where $R^2$ is $CH_3$, $R^1$ is $C_2H_4$, and n is 9, and which has an HLB value of 19.2;

the compound J is Kao's nonionic surfactant, trade name "Emulgen 430" (polyoxyethylene oleyl ether), which corresponds to the above-mentioned formula (I) where $R^2$ is $C_{18}H_{35}$, $R^1$ is $C_2H_4$, and n is 30, and which has an HLB value of 16.7.

As in Table 2, the rubber compositions of Examples 1 to 10 in which any of the compounds A to E was used were all free from discoloration after the outdoor shelf test for 1 month and kept good outward appearance, and in addition, the other physical properties thereof were also good. Further, the vulcanization speed of these compositions was high and the compositions were excellent in productivity. On the other hand, the rubber compositions of Comparative Examples 1 to 3 not containing a nonionic surfactant, as well as the other rubber compositions containing the compound E or the compound H that were said to be effective for enhancing the outward appearance of side wall portions in PTL 2 and PTL 1 or the compound J for use for workability improvement seriously discolored after the outdoor shelf test. The rubber composition containing the compound G had a good outward appearance, but the vulcanization speed thereof could not be high and the productivity thereof was not good. (For the invention of the discoloration preventing method, Comparative Example 6 is an example of the invention.) The compound I, which is similar to the compound for use herein and is described in JP-A 2001-123016 for use for workability improvement could be effective for enhancing the outward appearance, but lowers the tackifying power and the adhesion power; and therefore, the compound is difficult to use.

Those of which the difference between the value b* just after vulcanization and the value b* after the shelf test is smaller are better, as having a low degree of discoloration.

The compound A highly effective for preventing discoloration was incorporated in a rubber composition for tire treads and radial tires for passenger cars were formed of the composition and tested for discoloration. As shown in table 3, it is known that the compound A is effective for preventing discoloration of tires.

**Claims**

1.  A rubber composition comprising at least one rubber component selected from a dienic synthetic rubber and a natural rubber and, as incorporated therein, at least one nonionic surfactant selected from the compounds represented by the following formula (I):
    [Chem. 1]

    $$R^2O(R^1O)_nH \ldots \qquad (I)$$

    [in the formula (I), $R^2$ represents an alkyl group or an alkenyl group having from 8 to 12 carbon atoms, and the alkyl group and the alkenyl group may be any of linear chain-like, branched chain-like or cyclic ones; $R^1$ represents an alkylene group having from 2 to 4 carbon atoms; n indicates a mean addition molar number, and is from 16 to 30].

2.  The rubber composition according to claim 1, which contains wax as incorporated therein.

3.  The rubber composition according to claim 1 or 2, which contains an antiaging agent as incorporated therein.

4.  The rubber composition according to any of claims 1 to 3, wherein the nonionic surfactant is incorporated in an amount of from 0.1 to 10 parts by mass relative to 100 parts by mass of the rubber component therein.

5.  The rubber composition according to any of claims 1 to 4, wherein in the nonionic surfactant of the above formula (I), $R^1$ is an alkylene group having from 2 or 3 carbon atoms, and n is from 16 to 30.

6.  A tire of which the outer skin is formed of the rubber composition of any of claims 1 to 5.

7.  A method for preventing discoloration of a rubber composition, comprising incorporating at least one nonionic surfactant selected from the compounds represented by the following formula (I) to at least one rubber component selected from a dienic synthetic rubber and a natural rubber:
    [Chem. 2]

    $$R^2O(R^1O)_nH \ldots \qquad (I)$$

    [in the formula (I), $R^2$ represents an alkyl group or an alkenyl group having from 8 to 12 carbon atoms, and the alkyl group and the alkenyl group may be any of linear chain-like, branched chain-like or cyclic ones; $R^1$ represents an alkylene group having from 2 to 4 carbon atoms; n indicates a mean addition molar number, and is from 12 to 30].

8.  The method for preventing discoloration according to claim 7, wherein the mean addition molar number is from 16 to 30.

**Patentansprüche**

1.  Kautschukzusammensetzung, umfassend mindestens eine Kautschukkomponente, ausgewählt aus einem dienischen synthetischen Kautschuk und Naturkautschuk und darin eingebaut mindestens ein nichtionisches Tensid, das ausgewählt ist aus den Verbindungen, die dargestellt werden durch die folgende Formel (I):
    [Chem 1]

    $$R^2O\,(R^1O)_nH \qquad (I)$$

    [wobei in der Formel (I) $R^2$ eine Alkylgruppe oder eine Alkenylgruppe mit 8 bis 12 Kohlenstoffatomen darstellt und die Alkylgruppe und die Alkenylgruppe jeweils eine beliebige lineare kettenartige, verzweigte kettenartige oder cyclische Struktur sein können; $R^1$ eine Alkylengruppe mit 2 bis 4 Kohlenstoffatomen darstellt; n bezeichnet eine mittlere Additions-Molzahl und beträgt von 16 bis 30].

2.  Kautschukzusammensetzung nach Anspruch 1, die darin eingebaut Wachs enthält.

3.  Kautschukzusammensetzung nach Anspruch 1 oder 2, welche darin eingebaut ein Alterungsschutzmittel enthält.

**4.** Kautschukzusammensetzung nach einem der Ansprüche 1 bis 3, wobei das nichtionische Tensid bezogen auf 100 Massenteile der Kautschukkomponente darin in einer Menge von 0,1 bis 10 Massenteilen eingebaut ist.

**5.** Kautschukzusammensetzung nach einem der Ansprüche 1 bis 4, wobei in dem nichtionischen Tensid der vorgenannten Formel (I) $R^1$ eine Alkylengruppe mit 2 oder 3 Kohlenstoffatomen ist und n von 16 bis 30 beträgt.

**6.** Reifen, dessen Außenhaut aus der Kautschukzusammensetzung nach einem der Ansprüche 1 bis 5 gebildet ist.

**7.** Verfahren zur Verhinderung einer Verfärbung einer Kautschukzusammensetzung, umfassend das Einbringen von mindestens einem nichtionischen Tensid, das ausgewählt ist aus den Verbindungen der folgenden Formel (I), in mindestens eine Kautschukkomponente, die ausgewählt ist aus einem dienischen synthetischen Kautschuk und einem Naturkautschuk:
[Chem. 2]

$$R^2O(R^1O)_nH \qquad (I)$$

[wobei in der Formel (I) $R^2$ eine Alkylgruppe oder eine Alkenylgruppe mit 8 bis 12 Kohlenstoffatomen darstellt und die Alkylgruppe und die Alkenylgruppe eine beliebige lineare kettenartige, verzweigte kettenartige oder cyclische Struktur sein können; $R^1$ eine Alkylengruppe mit 2 bis 4 Kohlenstoffatomen darstellt; n bezeichnet eine mittlere Additions-Molzahl und beträgt 12 bis 30].

**8.** Verfahren zur Verhinderung einer Verfärbung nach Anspruch 7, wobei die mittlere Additions-Molzahl von 16 bis 30 beträgt.

## Revendications

**1.** Composition de caoutchouc comprenant au moins un composant de caoutchouc qui est sélectionné parmi un caoutchouc synthétique diénique et un caoutchouc naturel et, incorporé en son sein, au moins un agent tensioactif non ionique qui est sélectionné parmi les composés qui sont représentés par la formule (I) qui suit :
[Formule chimique 1]

$$R^2O(R^1O)_nH \qquad (I)$$

[dans la formule (I), $R^2$ représente un groupe alkyle ou un groupe alkényle qui comporte de 8 à 12 atomes de carbone, et le groupe alkyle et le groupe alkényle peuvent être d'une quelconque structure prise parmi les structures à chaîne linéaire, à chaîne ramifiée ou cyclique ; $R^1$ représente un groupe alkylène qui comporte de 2 à 4 atomes de carbone ; n représente un nombre molaire moyen d'addition et est compris entre 16 et 30].

**2.** Composition de caoutchouc selon la revendication 1, laquelle contient de la cire incorporée en son sein.

**3.** Composition de caoutchouc selon la revendication 1 ou 2, laquelle contient un agent antivieillissement incorporé en son sein.

**4.** Composition de caoutchouc selon l'une quelconque des revendications 1 à 3, dans laquelle l'agent tensioactif non ionique est incorporé selon une quantité de 0,1 à 10 partie(s) en masse par rapport à 100 parties en masse du composant de caoutchouc en son sein.

**5.** Composition de caoutchouc selon l'une quelconque des revendications 1 à 4, dans laquelle, dans l'agent tensioactif non ionique de la formule (I) mentionnée ci-avant, $R^1$ est un groupe alkylène qui comporte 2 ou 3 atomes de carbone, et n est compris entre 16 et 30.

**6.** Pneu dont la peau externe est formée à partir de la composition de caoutchouc selon l'une quelconque des revendications 1 à 5.

**7.** Procédé pour prévenir la décoloration d'une composition de caoutchouc, comprenant l'incorporation d'au moins un agent tensioactif non ionique qui est sélectionné parmi les composés qui sont représentés par la formule (I) qui suit à au moins un composant de caoutchouc qui est sélectionné parmi un caoutchouc synthétique diénique et un caoutchouc naturel :
[Formule chimique 2]

$$R^2O(R^1O)_nH \qquad (I)$$

[dans la formule (I), $R^2$ représente un groupe alkyle ou un groupe alkényle qui comporte de 8 à 12 atomes de carbone, et le groupe alkyle et le groupe alkényle peuvent être d'une quelconque structure prise parmi les structures à chaîne linéaire, à chaîne ramifiée ou cyclique ; $R^1$ représente un groupe alkylène qui comporte de 2 à 4 atomes de carbone ; n représente un nombre molaire moyen d'addition et est compris entre 16 et 30].

8. Procédé pour prévenir la décoloration selon la revendication 7, dans lequel le nombre molaire moyen d'addition est compris entre 16 et 30.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2001051677 A
- US 2008202660 A
- EP 0890603 A
- EP 1425338 A
- US 5714533 A
- EP 1757658 A
- JP 5194790 A
- JP 2004307812 A
- JP 2001200105 A
- JP 2001123016 A